# EUROPÄISCHE PATENTSCHRIFT

(11) **EP 1 727 727 B1**
(45) Veröffentlichungstag und Bekanntmachung des Hinweises auf die Patenterteilung: **06.01.2010**
(21) Anmeldenummer: 05715089.8
(22) Anmeldetag: 10.03.2005
(51) Int. Cl.: B62J 11/00

(54) **VORRICHTUNG ZUR BEFESTIGUNG EINES ADAPTERS AN AUFEINANDER STOSSENDEN STANGENTEILEN VON FAHRRÄDERN**
DEVICE FOR FIXING AN ADAPTER TO ADJACENT BAR PARTS OF BICYCLES
DISPOSITIF DE FIXATION D'UN ADAPTATEUR SUR DES TIGES DE BICYCLETTES ENTRANT EN CONTACT

(30) Priorität: 12.03.2004 DE 202004004049 U
(43) Veröffentlichungstag der Anmeldung: 06.12.2006
(73) Patentinhaber: ORTLIEB, Hartmut, 91560 Heilsbronn (DE)
(72) Erfinder: ORTLIEB, Hartmut, 91560 Heilsbronn (DE)
(74) Vertreter: Schuhmann, Albrecht
(86) Internationale Anmeldenummer: PCT/DE2005/000427
(87) Internationale Veröffentlichungsnummer: WO 2005/087573

(56) Entgegenhaltungen:
- WO-A-00/43257
- DE-A1- 4 008 211
- NL-A- 9 300 120
- US-A- 4 315 583
- US-A- 4 798 318
- US-B1- 6 279 803

## Beschreibung

Aus der WO 00/43257 ist eine Vorrichtung zur Befestigung eines Adapters an aufeinander stoßenden Stangenteilen von Fahrrädern mit den Merkmalen des Oberbegriffs des Anspruchs 1 bekannt.

Adapter für Lenkertaschen sind seit vielen Jahren bekannt. So zeigt die US-A-47 98 318 einen Adapter, bestehen aus einer Platte mit einem Schnapphacken, in die ein entsprechendes Gegenstück einer Lenkertasche einrastbar ist, die Bandklemmen für die Lenkerstange aufweist, die feststellbar sind. Einen ähnlichen Aufbau weist die WO 98/22332 auf, bei in Aufnahmen des Adapters einrastbare Schellen vorhanden sind. Um ein Kippen des Adapters zu vermeiden, ist eine Haltebrücke vorhanden, die unter den Lenkervorbau greift. Bei dem Lenkertaschenadapter gemäß DE-C-40 08 211 erfolgt das Abstützen des Adapters am Vorbau durch ein einstellbares Seil, das schlaufenartig unter den Vorbau fasst. DE DE-U-299 20 778 und DE-U-201 01 851 weisen Schellen für die Lenkerstange auf, wobei die Verbindung zwischen Adapter und einer Platte an der Lenkertasche durch einen Drehverschluss, bzw. Rastmittel erfolgt. Die DE-U-203 00 747 weist eine Mechanik zur Einstellung der Neigung der Lenkertasche gegenüber dem Adapter auf. Hier ist eine Verzahnung vorhanden, die gegen Federdruck horizontal in und außer Eingriff zu bringen ist, wobei das mit der Lenkertasche verbindbare Teil des Adapters verdreht werden kann, wenn die Verzahnung außer Eingriff steht. Diese Vorrichtung besteht aus relativ vielen Teilen, die den Aufbau verkomplizieren. Da heute die Vorbau/Lenkerkonfigurationen bei Fahrrädern verschiedener Hersteller in großem Maße variieren, passen die bekannten Lenkertaschenadapter, die sich an Standardkonfigurationen orientieren, häufig nicht und können keine Verwendung finden.

Aufgabe der vorliegenden Erfindung ist es, einen Adapter für Lenkertaschen zu schaffen, der flexibel für verschiedene Arten der Vorbau/Lenkerkonfiguration von Fahrrädern anwendbar ist, bei dem eine Einstellung an der Lenkstange einfach und sicher zu betätigen ist und der besonders wenig Platz in Anspruch nimmt.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist eine Vorrichtung zur Befestigung eines Adapters für Zubehör an aufeinander stoßenden Stangenteilen von Fahrrädern, wobei zwischen dem Adapter und dem Zubehör eine Rasteinrichtung vorhanden ist, wobei der Adapter an der Seite eines ersten Stangenteils, die einem zweiten, von diesem abkragenden Stangenteil des Fahrrads entgegen gesetzt liegt, anliegt und Befestigungsmittel für den Adapter an den Stangenteilen vorhanden sind, dadurch gekennzeichnet, dass die Befestigungsmittel aus zwei flexiblen oder biegesteifen Bügeln bestehen, die mit dem Adapter verbunden sind, wobei ein unterer Bügel on unten unter dem ersten Stangenteil hindurch über das zweite Stangenteil geführt ist und mit seinen Enden an dem Adapter befestigt ist, und wobei ein oberer Bügel von oben über das erste Stangeteil und unter das zweite Stangenteil hindurch geführt ist und mit seinen beiden Enden an dem Adapter befestigt ist, und wobei bei Spannung der Bügel, der Adapter fest gegen das zweite Stangenteil gepresst wird, wobei Keiner der Bügel ein Stangenteil vollumfänglich umgreift.

Nach der bevorzugten Ausführung der Erfindung ist das erste Stangenteil die Lenkstange und das zweite Stangenteil der Vorbau des Fahrrads. Es sind jedoch auch andere Situationen am Fahrradrahmen oder am Gepäckträger vorhanden, an denen die erfindungsgemäße Vorrichtung angebracht werden kann, solange die Voraussetzung erfüllt ist, dass ein Stangeteil mit einem anderen Stangenteil eine T-förmige Konfiguration bildet, wobei keine rechten Winkel vorhanden sein müssen.

Vorzugsweise ist der Adapter mit seiner Anlagefläche der Form der Lenkstange angepasst. Nach einer bevorzugten Ausführung weist der Adapter schenkelähnliche Anschlussteile für die Bügelenden auf. Nach einer Ausführung der Erfindung weisen die Bügelenden Nippel auf, die unverlierbar in passenden Bohrungen der Anschlussteile gehalten sind.

Die Anschlussteile können vorteilhafterweise lösbar in oder an dem Adapter befestigt sein. Zur besseren Anpassung können in einem Set Anschlussteile verschiedener Länge vorhanden sein. Vorzugsweise liegen die Anschlussteile an der Lenkstange an und sind mit ihren Anlageflächen passend zur Lenkstange geformt. Nach einer vorteilhaften Ausführung der Erfindung sind die Anschlussteile in Schächten des Adapters geführt.

Die Nippel können in den Anschlussteilen und/oder die Anschlussteile in oder an dem Adapter senkrecht zu der Lenkstange verstellbar angeordnet sein. Vorteilhafterweise sind die Nippel durch Zwischenscheiben, Muttern, Schrauben oder dergleichen in verschiedenen Positionen in den Anschlussteilen festlegbar sind.

Nach einer Ausführung der Erfindung bestehen die Bügel aus Seilen, die vorteilhafterweise ummantelt sein können. Alternativ bestehen die Bügel aus Draht, der ebenfalls ummantelt sei kann. Nach einer besonderen Ausführung der Erfindung weisen die Drähte endseitig zur Befestigung und/oder Einstellung an dem Adapter ein Innen-/oder Außengewinde auf, wobei der Adapter oder die Anschlussteile die passenden Gegengewinde aufweisen, so dass die Länge der Bügel einstellbar ist.

Nach einer weiteren besonderen Ausführung der Erfindung ist ein Keil für die Positionierung des um den Vorbau greifenden Trums wenigstens eines Bügels vorhanden. Vorteilhafterweise weist der Keil eine oder mehrere Kerben zur Aufnahme des Bügels auf.

Nach einer anderen Ausführung der Erfindung ist am Vorbau eine sich auf diesem und/oder der Lenkstange abstützende Zwingvorrichtung für die Bügel vorhanden, wobei die Zwingvorrichtung ein stufenlos einstellbares Element aufweist, mit dem ein Zug auf die Bügel ausübbar ist. Beispielsweise weist die Zwingvorrichtung Innengewinde für Gewindestifte auf, wobei die Gewindestifte Ösen für die Bügel aufweisen, und wobei durch Verstellen der Gewindestifte ein Zug auf die Bügel ausübbar ist.

Nach einer anderen Ausführung der Erfindung weisen die Bügel eine unterschiedliche Länge auf. Es können in einem Set auch austauschbare Bügel verschiedener Länge vorhanden sein.

Im Folgenden wird die Erfindung anhand von Zeichnungen rein beispielhaft näher beschrieben. Dabei zeigen:
Fig. 1 eine Draufsicht auf einen Vorbau mit Lenkstange und Adapter;
Fig. 2 eine Draufsicht, wie Fig. 1, jedoch mit einem zusätzlichen Keil;
Fig. 3 eine Draufsicht wie Fig. 1, jedoch teilweise geschnitten;
Fig. 4 eine Seitenansicht eines Vorbaus mit Lenkstange und Adapter, sowie eine Lenkertasche;
Fig. 5 eine Seitenansicht eines Vorbaus mit Lenkstange und eines Adapters, sowie einen Keil;
Fig. 6 eine Seitenansicht, wie Fig. 5, jedoch mit einem anders angeordneten Keil.
Fig. 7 eine Seitenansicht einer anderen Ausführung eines Adapters mit Keil;
Fig. 8 eine Seitenansicht einer weiteren Ausführung eines Adapters;
Fig. 9 eine Seitenansicht einer weiteren Ausführung eines Adapters mit einer Zwinge am Vorbau.
Fig. 10 eine Draufsicht auf eine alternative Ausführung der Erfindung;
Fig. 11 die Draufsicht von Fig. 10 mit einer erklärenden Darstellung der Befestigung des Adapters.

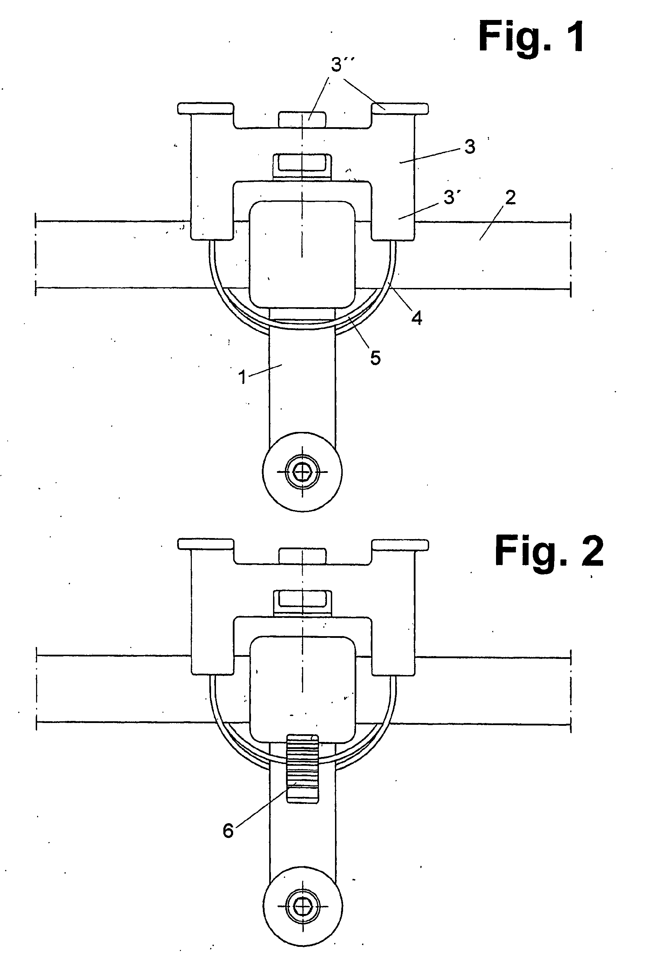

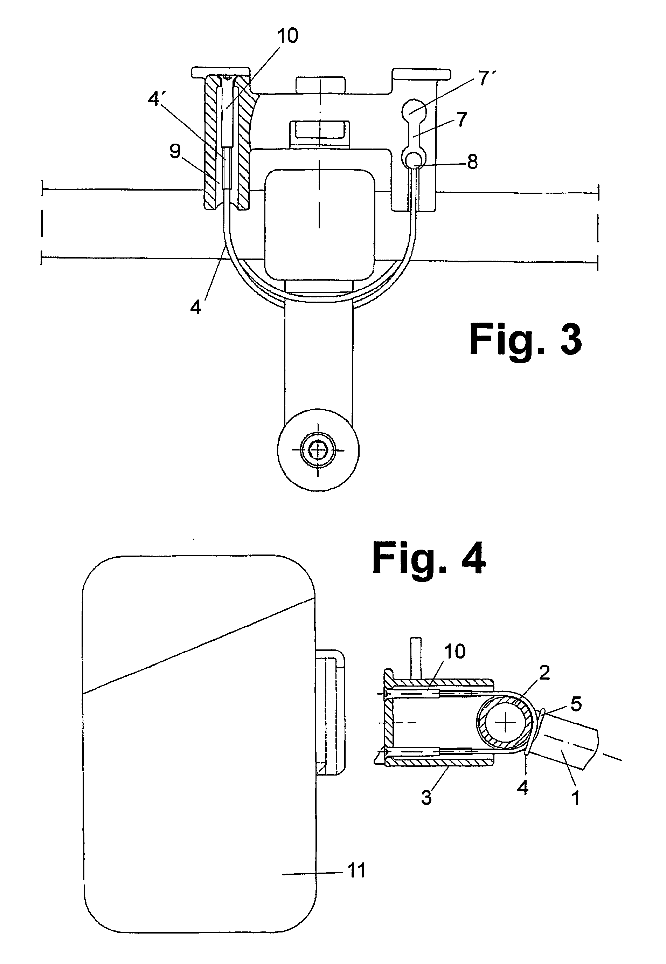

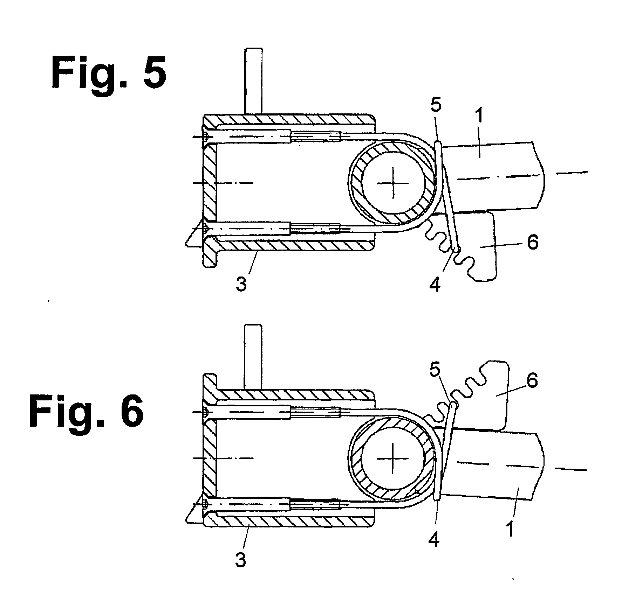

Fig. 1 zeigt in der Draufsicht den Vorbau 1 mit Lenkstange 2 eines Fahrrads. An der Lenkstange 2 und dem Vorbau 1 ist ein Adapter 3 für eine Lenkertasche befestigt. Der Adapter 3 weist vorne die bekannten Anschlusselemente 3" für eine Lenkertasche auf und ist zur Lenkstange 2 hin mit zwei Schenkeln 3' ausgebildet, mit denen er an der Lenkstange 2 anliegt. Für die Befestigung des Adapters 3 werden zwei flexible oder biegesteife Bügel 4, 5 verwendet, die endseitig in dem Adapter festgelegt sind. Ein Bügel 4 reicht von dem Adapter 3 aus über die Lenkstange 2 und ist unter dem Vorbau 1 hindurchgeführt. Der zweite Bügel 5 reicht von dem Adapter 3 aus unter die Lenkstange hindurch und ist über den Vorbau 1 geführt. Die Länge der Bügel 4,5 ist so gewählt oder eingestellt, dass der Adapter 3 fest und unverrutschbar gegen die Lenkstange 2 gepresst wird. Fig. 2 zeigt die gleiche Ansicht, wie Fig. 1, mit dem Unterschied, dass ein Keil 6 auf dem Vorbau 1 angeordnet ist, über den der zweite Bügel 5 zur Längeneinstellung geführt ist, wie dies weiter unten noch beschrieben werden wird (Fig. 5 und 6). Fig. 3 zeigt wiederum die gleiche Ansicht, wie Fig. 1, wobei hier zwei Befestigungs- und Einstellmöglichkeiten der Bügel anhand des ersten Bügels 4 gezeigt sind. Auf der linken Seite ist eine Mutter oder Schraube 10 mit Innengewinde in einem Hohlraum 9 des Adapters axial festgelegt und der Bügel 4 weist ein Außengewinde 4' auf, mit dem er in die Schraube 10 eingeschraubt wird. Auf der rechten Seite ist alternativ eine Ausführung mit einem Nippel 8 am Ende des Bügels 4 gezeigt, für den eine Ausnehmung 7 mit zwei Haltebohrungen 7' in dem Adapter vorhanden ist, die axial hintereinander liegen, so dass der Nippel 8 unterschiedlich tief in den Adapter eingesetzt werden kann.

Fig. 4 zeigt eine Seitenansicht im Schnitt der vorher in der Draufsicht gezeigten Konfiguration. Hier ist gut zu erkennen, wie die Bügel 4, 5, die in den Schrauben 10 befestigt sind, um die Lenkstange 2 und den Vorbau 1 geschlungen sind. Es ist leicht zu verstehen, dass durch Anziehen der Schrauben 10 der Zug auf die Bügel 4, 5 so erhöht wird, dass der Adapter 3 fest an die Lenkstange 2 gepresst wird. Links in der Darstellung ist eine Lenkertasche 11 angedeutet, die auf den Adapter 3 aufgesteckt wird. Fig. 5 und 6 zeigen die gleiche Ansicht, wie Fig. 3, mit dem Unterschied, dass hier der Keil 6 von Fig. 2 dargestellt ist. Der Keil 6 ist ein in der Seitenansicht dreieckiges Kunststoffteil, das im gezeigten Fall einen rechten Winkel aufweist und mit einer Kathete auf dem Vorbau 1 aufliegt und dessen Hypotenuse mehrere Kerben für die Aufnahme des um den Vorbau geschlungene Trums eines Bügels aufweist. In Fig. 5 ist der Bügel 4 z.B. in die dritte Kerbe von unten und in Fig. 4 der Bügel 5 in die zweite Kerbe von unten eingelegt. Je nach Wahl der Kerbe des Keils 6 kann so die Spannung der Bügel 4, 5 voreingestellt werden.

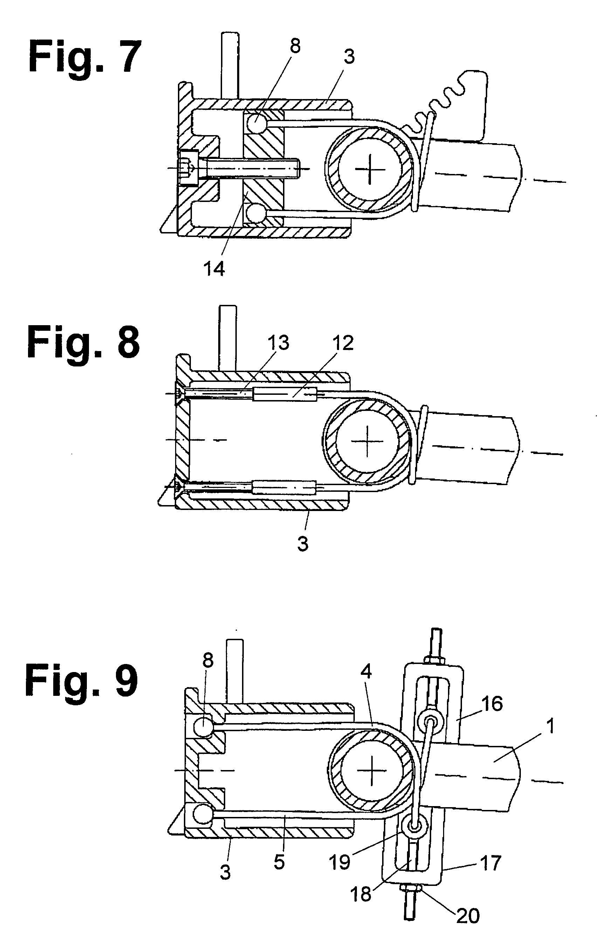

Fig. 7 bis 8 zeigen Variante des Festlegung und Einstellung der Bügelenden in dem Adapter. So können di Nippel 8 in einem Zwischenteil 14 des Adapters eingelegt sein, das verschiebbar und festlegbar in dem Adapter 3 geführt ist (Fig. 7). Die Nippel 8 können auch axial unveränderbar in dem Adapter 3 festgelegt sein, wobei andere Einstellungsmöglichkeiten für die Bügel vorhanden sind (Fig. 9). Fig. 8 zeigt eine Variante, bei denen die Bügelenden Gewindehülsen 12 aufweisen, die auf axial in dem Adapter 3 festgelegten Schrauben 13 aufgeschraubt sind. Die Einstellvariante von Fig. 9 besteht aus Zwingen 16, 17 mit U-förmigem Querschnitt, die sich mit den Schenkeln auf dem Vorbau abstützen. In einer Gewindebohrung der Basis der Zwingen 16, 17 ist jeweils ein Gewindestift 18 eingeschraubt, dessen inneres Ende eine Öse 19 für das um den Vorbau 1 geschlungene Ende eines Bügels 4, 5 aufweist. Die Gewindestifte 18 können nach innen und außen geschraubt werden und werden in passender Stellung durch Muttern 20 gekontert.

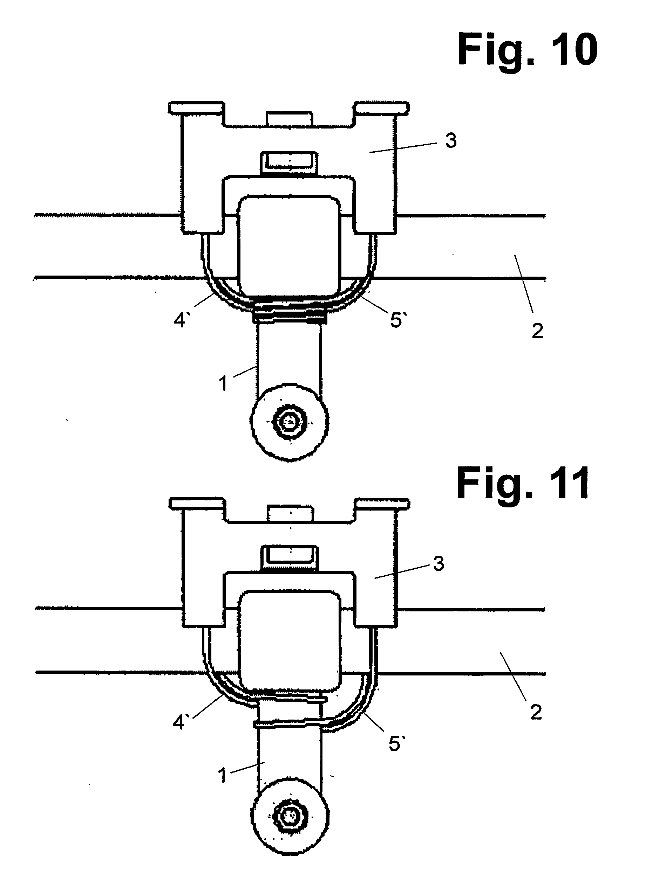

Fig. 10 und 11 zeigen eine alternative Ausführungsform der vorliegenden Erfmdung. Vorbau 1, Lenkstange 2 und Adapter 3 weisen keinen Unterschied zu der oben beschriebenen Ausführung auf. Jedoch sind die flexiblen oder biegesteifen Bügel 4' und 5' anders geführt, als bei der vorherigen Ausführung. Der Bügel 4' geht von der linken Seite des Adapters 3 unter oder über der Lenkstange 2 aus, bildet eine Schlaufe um den Vorbau 1 und kehrt auf der jeweils anderen Seite der Lenkstange 2 zu dem Adapter 3 zurück. Der Bügel 5' geht von der rechten Seite des Adapters 3 unter oder über der Lenkstange 2 aus, bildet eine Schlaufe um den Vorbau 1 und kehrt auf der jeweils anderen Seite der Lenkstange 2 zu dem Adapter 3 zurück. Im übrigen kann diese Ausführungsform die weiteren Merkmale der vorhergehenden Ausführung aufweisen.

## Patentansprüche

1. Vorrichtung zur Befestigung eines Adapters (3) für Zubehör an aufeinander stoßenden Stangenteilen von Fahrrädern, wobei zwischen dem Adapter und dem Zubehör eine Rasteinrichtung vorhanden ist, wobei der Adapter an der Seite eines ersten Stangenteils, die einem zweiten, von diesem abkragenden Stangenteil des Fahrrads entgegen gesetzt liegt, anliegt und Befestigungsmittel für den Adapter an den Stangenteilen vorhanden sind,
**dadurch gekennzeichnet,**
**dass** die Befestigungsmittel aus zwei flexiblen oder biegesteifen Bügeln (4, 5) bestehen, die mit dem Adapter (3) verbunden sind,
wobei ein unterer Bügel (5) von unten unter dem ersten Stangenteil hindurch über das zweite Stangenteil geführt ist und mit seinen Enden an dem Adapter befestigt ist,
und wobei ein oberer Bügel (4) von oben über das erste Stangeteil und unter das zweite Stangenteil hindurch geführt ist und mit seinen beiden Enden an dem Adapter befestigt ist,
und wobei bei Spannung der Bügel, der Adapter fest gegen das zweite Stangenteil gepresst wird, wobei keiner der Bügel ein Stangenteil vollumfänglich umgreift.

2. Vorrichtung nach Anspruch 1,
**dadurch gekennzeichnet,**
**dass** das erste Stangenteil die Lenkstange (2) und das zweite Stangenteil der Vorbau (1) des Fahrrads ist.

3. Vorrichtung nach Anspruch 2,
**dadurch gekennzeichnet,**
**dass** der Adapter (3) mit seiner Anlagefläche der Form der Lenkstange angepasst ist.

4. Vorrichtung nach einem der vorhergehenden Ansprüche,
**dadurch gekennzeichnet,**
**dass** der Adapter Anschlussteile (3', 14) für die Bügelenden aufweist.

5. Vorrichtung nach Anspruch 4,
**dadurch gekennzeichnet,**
**dass** die Bügelenden Nippel (8) aufweisen, die unverlierbar in passenden Bohrungen der Anschlussteile gehalten sind.

6. Vorrichtung nach Anspruch 4 oder 5,
**dadurch gekennzeichnet,**
**dass** die Anschlussteile lösbar in oder an dem Adapter befestigt sind.

7. Vorrichtung nach Anspruch 6,
**dadurch gekennzeichnet,**
**dass** Anschlussteile verschiedener Länge vorhanden sind.

8. Vorrichtung nach Anspruch 5, 6 oder 7,
**dadurch gekennzeichnet,**
**dass** die Anschlussteile an der Lenkstange anliegen und mit ihren Anlageflächen passend zur Lenkstange geformt sind.

9. Vorrichtung nach einem der Ansprüche 5 bis 8,
**dadurch gekennzeichnet,**
**dass** die Anschlussteile in Schächten des Adapters geführt sind.

10. Vorrichtung nach einem der Ansprüche 5 bis 9,
**dadurch gekennzeichnet,**
**dass** die Nippel durch Zwischenscheiben, Muttern, Schrauben oder dergleichen in verschiedenen Positionen in den Anschlussteilen festlegbar sind.

11. Vorrichtung nach einem der vorhergehenden Ansprüche,
**dadurch gekennzeichnet,**
**dass** die Bügel (4, 5) aus Seilen bestehen.

12. Vorrichtung nach einem der Ansprüche 1 bis 10,
**dadurch gekennzeichnet,**
**dass** die Bügel aus Draht bestehen.

13. Vorrichtung nach Anspruch 11 oder 12,
**dadurch gekennzeichnet,**
**dass** die Bügel ummantelt sind.

14. Vorrichtung nach Anspruch 12 oder 13,
**dadurch gekennzeichnet,**
**dass** die Drähte endseitig zur Befestigung und/oder Einstellung an dem Adapter ein Innen-/oder Außengewinde (12, 4') aufweisen,
wobei der Adapter oder die Anschlussteile die passenden Gegengewinde (13, 10) aufweisen.

15. Vorrichtung nach einem der vorhergehenden Ansprüche,
**dadurch gekennzeichnet,**
**dass** ein Keil (6) für die Positionierung des um den Vorbau greifenden Trums wenigstens eines Bügels vorhanden ist.

16. Vorrichtung nach Anspruch 15,
**dadurch gekennzeichnet,**
**dass** der Keil (6) eine oder mehrere Kerben zur Aufnahme des Bügels aufweist.

## Claims

1. Device for fastening an adaptor (3) for accessories to abutting bar parts of bicycles, wherein a locking means is present between the adaptor and the accessories, wherein the adaptor bears on the side of a first bar part opposite a second bar part of the bicycle, which second bar part protrudes from the first, and means for fastening the adaptor on the bar parts are present,
**characterized in that**
the fastening means consist of two flexible or rigid clips (4, 5) which are connected to the adaptor (3),
wherein a lower clip (5) is guided through from below under the first bar part, over the second bar part and is fastened by way of its ends to the adaptor,
and wherein an upper clip (4) is guided through from above over the first bar part and under the second bar part and is fastened by way of its two ends to the adaptor,
and wherein when the clips are tensioned, the adaptor is pressed firmly against the second bar part, wherein neither of the clips engages all the way around a bar part.

2. Device according to Claim 1,
**characterized in that**
the first bar part is the handlebar (2) and the second bar part is the stem (1) of the bicycle.

3. Device according to Claim 2,
**characterized in that**
the bearing surface of the adaptor (3) is matched to the form of the handlebar.

4. Device according to one of the preceding claims,
**characterized in that**
the adaptor has connection parts (3', 14) for the ends of the clips.

5. Device according to Claim 4,
**characterized in that**
the ends of the clips have nipples (8) which are held captively in matching bores in the connection parts.

6. Device according to Claim 4 or 5,
**characterized in that**
the connection parts are fastened detachably in or on the adaptor.

7. Device according to Claim 6,
**characterized in that**
connection parts having different lengths are present.

8. Device according to Claim 5, 6 or 7,
**characterized in that**
the connection parts bear on the handlebar and the form of their bearing surfaces matches the handlebar.

9. Device according to one of Claims 5 to 8,
**characterized in that**
the connection parts are guided in ducts in the adaptor.

10. Device according to one of Claims 5 to 9,
**characterized in that**
the nipples can be fixed in various positions in the connection parts by washers, nuts, screws or the like.

11. Device according to one of the preceding claims,
**characterized in that**
the clips (4, 5) consist of cables.

12. Device according to one of Claims 1 to 10,
**characterized in that**
the clips consist of wire.

13. Device according to Claim 11 or 12,
**characterized in that**
the clips are sheathed.

14. Device according to Claim 12 or 13,
**characterized in that**
the ends of the wires have an internal or external thread (12, 4') for fastening and/or adjusting them on the adaptor,
wherein the adaptor or the connection parts have the matching counter-thread (13, 10).

15. Device according to one of the preceding claims,
**characterized in that**
a wedge (6) for positioning the strand of at least one clip which engages around the stem is present.

16. Device according to Claim 15,
**characterized in that**
the wedge (6) has one or more notches for holding the clip.

## Revendications

1. Dispositif pour la fixation d'un adaptateur (3) pour accessoire sur des parties de barre juxtaposées de vélos, un dispositif d'encliquetage étant présent entre l'adaptateur et l'accessoire, l'adaptateur s'appliquant sur le côté d'une première partie de barre, qui est opposé à une seconde partie de barre, dépassant de la première, du vélo, et des moyens de fixation pour l'adaptateur étant présents sur les parties de barre,
**caractérisé en ce que**
les moyens de fixation sont constitués de deux étriers (4, 5) flexibles ou rigides à la flexion, qui sont reliés à l'adaptateur (3),
un étrier (5) inférieur étant guidé par en bas au-dessous de la première partie de barre en passant par-dessus la seconde partie de barre et étant fixé par ses extrémités à l'adaptateur,
et un étrier (4) supérieur étant guidé par en haut en passant par-dessus la première partie de barre et au-dessous de la seconde partie de barre et étant fixé par ses deux extrémités à l'adaptateur,
et l'adaptateur étant comprimé fermement contre la seconde partie de barre en cas de tension des étriers, aucun des étriers n'entourant une partie de barre sur toute la circonférence.

2. Dispositif selon la revendication 1,
**caractérisé en ce que**
la première partie de barre est le guidon (2) et la seconde partie de barre la partie avant (1) du vélo.

3. Dispositif selon la revendication 2,
**caractérisé en ce que**,
l'adaptateur (3) est adapté avec sa surface d'appui à la forme du guidon.

4. Dispositif selon l'une quelconque des revendications précédentes,
**caractérisé en ce que**
l'adaptateur présente des parties de raccordement (3', 14) pour les extrémités d'étrier.

5. Dispositif selon la revendication 4,
**caractérisé en ce que**
les extrémités d'étrier présentent des nipples (8), qui sont maintenus de façon imperdable dans des alésages adaptés des parties de raccordement.

6. Dispositif selon la revendication 4 ou 5,
**caractérisé en ce que**
les parties de raccordement sont fixées de façon mobile dans ou sur l'adaptateur.

7. Dispositif selon la revendication 6,
**caractérisé en ce que**
des parties de raccordement de longueur différente sont présentes.

8. Dispositif selon la revendication 5, 6 ou 7,
**caractérisé en ce que**
les parties de raccordement s'appliquent sur le guidon et sont formées avec leurs surfaces d'appui de façon adaptée par rapport au guidon.

9. Dispositif selon l'une quelconque des revendications 5 à 8,
**caractérisé en ce que**
les parties de raccordement sont guidées dans des gaines de l'adaptateur.

10. Dispositif selon l'une quelconque des revendications 5 à 9,
**caractérisé en ce que**
les nipples peuvent être fixés par des rondelles intermédiaires, écrous, vis ou similaires dans différentes positions dans les parties de raccordement.

11. Dispositif selon l'une quelconque des revendications précédentes,
**caractérisé en ce que**
les étriers (4, 5) sont à base de câbles.

12. Dispositif selon l'une quelconque des revendications 1 à 10,
**caractérisé en ce que**
les étriers sont à base de fil.

13. Dispositif selon la revendication 11 ou 12,
**caractérisé en ce que**
les étriers sont enrobés.

14. Dispositif selon la revendication 12 ou 13,
**caractérisé en ce que**
les fils présentent un filetage intérieur et/ou un filetage extérieur (12, 4') côté extrémité pour la fixation et/ou le réglage sur l'adaptateur,
l'adaptateur ou les parties de raccordement présentant les contre-filetages (13, 10) adaptés.

15. Dispositif selon l'une quelconque des revendications précédentes,
**caractérisé en ce que**
une clavette (6) est présente pour le positionnement de la branche, passant autour de la partie avant, d'au moins un étrier.

16. Dispositif selon la revendication 15,
**caractérisé en ce que**
la clavette (6) présente une ou plusieurs entailles pour le logement de l'étrier.
